# NEUE EUROPÄISCHE PATENTSCHRIFT

(11) **EP 0 254 210 B2**
(45) Veröffentlichungstag und Bekanntmachung des Hinweises auf die Entscheidung über den Einspruch: **08.09.1993**
(45) Hinweis auf die Patenterteilung: 03.01.1990
(21) Anmeldenummer: 87110287.7
(22) Anmeldetag: 30.10.1984
(51) Int. Cl.: B62B 3/10

(54) **Stapelbarer Einkaufswagen**
Nestable shopping trolley
Chariot d'achats emboîtable

(30) Priorität: 06.10.1984 DE 8429434 U
(43) Veröffentlichungstag der Anmeldung: 27.01.1988
(62) Teilanmeldung aus: 84113064.4
(73) Patentinhaber: WANZL METALLWARENFABRIK GMBH, D-89336 Leipheim (DE)
(72) Erfinder: Wanzl, Rudolf, D-8874 Leipheim (DE)

(56) Entgegenhaltungen:
- DE-U- 8 331 746
- FR-A- 2 530 570
- US-A- 3 112 934

## Beschreibung

Die Erfindung betrifft einen stapelbaren Einkaufswagen, im wesentlichen bestehend aus einem Fahrgestell und einem auf Stützen des Fahrgestelles aufgesetzten, eine Schiebeeinrichtung aufweisenden Korb, dessen Rückwand in das Korbinnere verschwenkbar ist, wobei an dem der Schiebeeinrichtung zugeordneten Ende des Einkaufswagens eine aus einer Nichtgebrauchslage in eine Gebrauchslage und umgekehrt bewegbare Ablage zum Abstellen größerer Gegenstände vorgesehen ist und die Ablage aus einem Schwenkteil besteht, das mit zwei auf Abstand gehaltenen Streben ausgestattet ist, die mit ihren unteren Enden um eine am rückwärtigen Ende des Einkaufswagens befindliche waagrechte Achse schwenkbar am Fahrgestell befestigt sind und im oberen Bereich des Schwenkteiles ein zum Tragen der größeren Gegenstände bestimmter, winklig zu den Streben angeordneter, zum vorderen Ende des Einkaufswagens gerichteter und in Gebrauchslage bevorzugt rechtwinklig zur Rückwand des Korbes angeordneter, entgegen der Schieberichtung des Einkaufswagens abfallend geneigter Ablageabschnitt vorgesehen ist und wobei das um die waagrechte Achse bewegbare Schwenkteil durch wenigstens ein zwischen den Stützen angeordnetes Halteteil in seiner Gebrauchslage so gehalten ist, daß das Halteteil einen Teil des Schwenkteiles hintergreift und der vom Halteteil hintergriffene Teil des Schwenkteiles durch den Ablageabschnitt gebildet ist.

Durch das deutsche Gebrauchsmuster G 83 31 746.5 sind derartige Einkaufswagen bekannt. Die Ablagen dieser Einkaufswagen bestehen aus einem einen Ablageabschnitt aufweisenden Schwenkteil, an das ein Halteteil angelenkt ist, welches den Schwenkbereich der Ablage in Gebrauchslage begrenzen hilft. Zu diesem Zweck ist das Halteteil an einem weiteren am Einkaufswagen befindlichen Bauteil, beispielweise an einem Querstab oder an einem Bügel beweglich befestigt. Die Funktion der Ablage ist bei diesem bekannten Ausführungsbeispiel nur dann garantiert, wenn diese drei Bauteile, also Schwenkteil, Halteteil und das am Einkaufswagen befindliche, als Querstab oder Bügel gestaltete Bauteil zusammenwirken.

Die Aufgabe der Erfindung besteht darin, einen gattungsgemäßen Einkaufswagen so weiterzuentwickeln, daß der zur Bildung und zum Funktionieren der Ablage erforderliche Bauteile- und Fertigungsaufwand gegenüber bisher bekannten Lösungen reduziert wird.

Die Lösung der Aufgabe besteht darin, daß das wenigstens eine Halteteil starr am Fahrgestell oder am Korb befestigt und zur Schieberichtung des Einkaufswagen hin offen ist.

Der Vorteil der Erfindung besteht darin, daß zum Funktionieren der Ablage nur noch zwei Bauteile erforderlich sind, nämlich das Schwenkteil und das Halteteil. Die Funktion des im deutschen Gebrauchsmuster G 83 31 746.5 genannten weiteren Bauteiles in Form eines Querstabes oder Bügels wird bei der erfindungsgemäßen Lösung in vorteilhafter Weise auf das Halteteil übertragen. Durch diese Maßnahme erspart man sich die Kosten für die Herstellung eines dritten Bauteiles und für dessen Anbringen am Einkaufswagen. Bei Massenartikeln, wie es Einkaufswagen sind, ist eine Reduzierung des Herstellkosten stets von enormer Bedeutung.

Nun sind wohl durch die US-A-3,112,934 Einkaufswagen bekannt, die unterhalb ihres Korbes eine aus einem korbartigen Behältnis und aus einem Ablageabschnitt bestehende weitere Warenablage aufweisen. Das korbartige Behältnis ist innerhalb jener vier Stützen, die den Korb tragen, auf gleicher Höhe wie die Seitenrahmen des Fahrgestelles starr an diesem angeordnet. An die hintere obere Querverbindung des Behältnisses schließt der Ablageabschnitt an, der sich entgegengesetzt zur Schieberichtung der Einkaufswagen nach hinten ansteigend erstreckt. Dieser Ablageabschnitt weist zwei Streben auf, die innerhalb der Ebene des Ablageabschnittes nach unten gerichtet sind und die an einem die hinteren Stützen des Korbes verbindenden Querstab verschwenkbar angelenkt sind. Zu beiden Seiten des Ablageabschnittes ist je eine stabförmige Halteeinrichtung vorgesehen. Jede Halteeinrichtung ist in einem spitzen Winkel zur Ablage angeordnet, wobei sich die Halteeinrichtungen in Fahrtrichtung erstrecken und mit ihren freien Enden, je nach Ausführungsbeispiel, entweder je einen die paarweise angeordneten Stützen verbindenden Längsstab schiebebeweglich umfassen oder die beiden hintersten der paarweisen Stützen hintergreifen. Durch diese Maßnahmen ist der Schwenkbereich des Ablageabschnittes festgelegt. Derentscheidende Nachteil dieser Einkaufswagen besteht darin, daß die beschriebene Warenablage aus dem Ablageabschnitt und einem separaten Behältnis besteht, so daß der angestrebte Nutzen, nämlich das Abstellen großvolumiger Gegenstände außerhalb des Korbes zu ermöglichen, nur mit Hilfe eines relativ großen Bauteileaufwandes erzielt werden kann.

Darüberhinaus dient der Ablageabschnitt dieser Einkaufswagen ausschließlich dazu, das Abstellen von Ware im korbartigen Behältnis zu erleichtern, ein Herausfallen der Ware zu verhindern und die Abstellfläche des korbartigen Behältnisses zu vergrößern. Einen Hinweis darüber, wonach größere Gegenstände ausschließlich auf dem Ablageabschnitt abgestellt werden können, vermittelt die US-A-3,112,934 hingegen nicht.

Beim bevorzugten Ausführungsbeispiel ist das Halteteil als fanghakenartiger Bügel gestaltet, der aus Draht gefertig, äußerst kostengünstig herstellbar ist. In Gebrauchslage wird das Schwenkteil vom Halteteil derart gehalten, daß es im Bereich des Ablageabschnittes einen Teil des Schwenkteiles hintergreift. Die vorgeschlagene Lösung bietet sich insbesondere dann an, wenn ein Einkaufswagen relativ hoch gebaut, d. h., wenn sein Korb sehr hoch plaziert ist. In Nichtgebrauchslage der Ablage bleibt dann noch für den nach unten ragenden Ablageabschnitt ausreichend Platz, ohne daß der Ablageabschnitt beim Ineinanderschieben zweier Einkaufswagen an das Fahrgestell eines einzuschiebenden Einkaufswagens oder beim Befahren von Bodenunebenheiten am Boden anstößt.

Die Erfindung wird anhand eines bevorzugten Ausführungsbeispieles näher erläutert. Es zeigt
Fig. 1 einen Einkaufswagen in Seitenansicht, dessen Halteteil durch einen hakenartigen Bügel gebildet ist und
Fig. 2 im Detail den Einkaufswagen nach Fig. 1 in perspektivischer Ansicht.

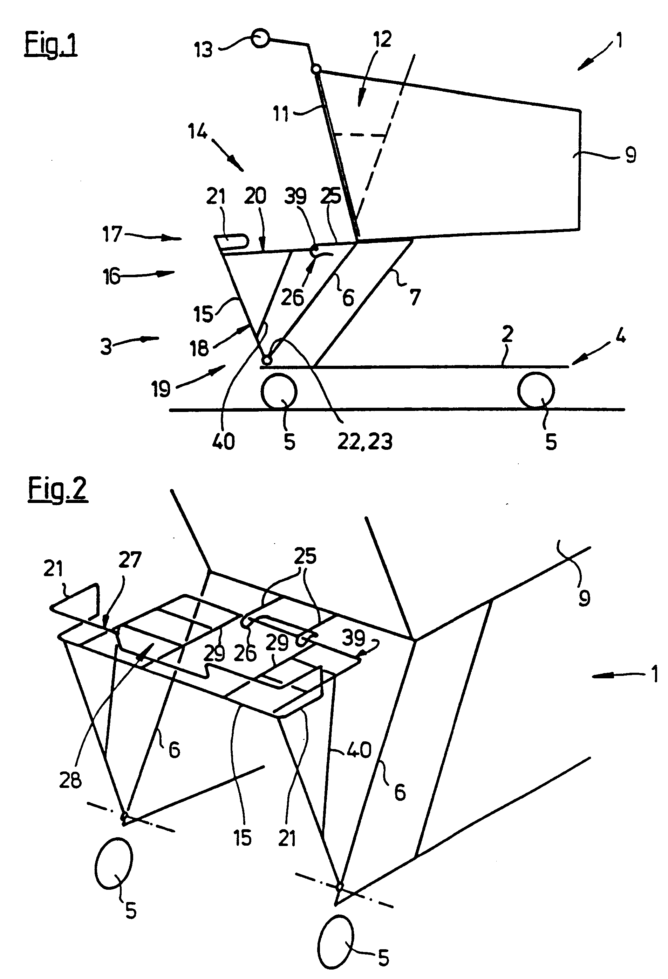

Der Einkaufswagen 1 entsprechend Fig. 1 besteht in üblicher Weise aus einem nach vorne sich verengenden, also konischen Fahrgestell 2 mit vier Rollen 5. Am hinteren Ende 3 des Fahrgestelles 2 sind zum Fahrgestell 2 gehörende, zu beiden Seiten des Fahrgestelles 2 schräg nach oben strebende Stützen 6, 7 vorgesehen, die einen Korb 9 zur Aufnahme von Eirnnkaufsgut tragen. Der Korb 9 verengt sich in bekannter Weise ebenfalls nach vorne, besitzt also konnische Form und weist an seinem hinteren Ende eine Rückwand 11 auf, die gemäß bekannter Ausführung um eine oben liegende waagrechte Achse aus einer das hintere Korbende verschließenden Lage in das Korbinnere verschwenkbar ist. Die Rückwand 11 kann sowohl als einfache ebene Gitterwand, als auch als doppelte Klappe mit einer Sitzfläche zur Bildung eines bekannten Kindersitzes 12 gestaltet sein. Nach rückwärts schließt der Korb 9 mit einem Handgriff 13 ab. Der Korb 9 ist fest mit dem Fahrgestell 2 verbunden.

Die Ablage 14 ist im Beispiel bevorzugt an den beiden hinteren Stützen 6 befestigt. Sie (14) besteht im wesentlichen aus einem Schwenkteil 15, das zwei auf Abstand gehaltene Streben 18 besitzt, die mit ihren unteren Enden 19 schlaufenartig um einen als waagrechte Achse 23 vorgesehenen Querstab 22, der die beiden hinteren Stützen 6 verbindet, gebogen sind. Der Querstab 22 ist höher angeordnet, als der vordere bevorzugt waagrechte Bereich 4 des Fahrgestelles 2. Die Streben 18 und damit das Schwenkteil 15 lassen sich somit radial um die waagrechte Achse 23 bewegen. Im oberen Bereich 16 des Schwenkteiles 15 ist ein bevorzugt als Gitterrost oder Bügel gestalteter, winklig zu den Streben 18 angeordneter Ablageabschnitt 20 vorgesehen, welcher zum vorderen Ende des Einkaufswagens 1 gerichtet ist und der in Gebrauchslage eine bevorzugt rechtwinklig zur Rückwand 11 angeordnete Lage einnimmt. DerAblageabschnitt 20 und die Streben 18 können aus Festigkeitsgründen durch Stützen 40 verbunden sein. An seinem oberen Ende 17 besitzt das Schwenkteil 15 zu beiden Seiten seitliche Anschläge 21 welche verhindern, daß ein auf die Ablage 14 gestellter Gegenstand seitlich herabfällt. Das Innenmaß der seitlichen Anschläge 21 zueinander ist im Beispiel geringfügig größer, als das Außenmaß der rechten und linken Stützen 6, 7 zueinander, so daß zumindest die Stützen 6 von den seitlichen Anschlägen 21 von außen dann umgriffen werden, wenn das Schwenkteil 15 in Nichtgebrauchslage an den Stützen 6 anliegt. Die vordere Querstrebe 39 des Ablageabschnittes 20 wird von einer Schlaufe 26 umgriffen, die einem als Bügel gestalteten Halteteil 25 angehört, das an der Unterseite des Korbes 9 oder an einer zum Fahrgestell 2 gehörenden Querverbindung, beispielsweise einem Stab angeschweißt oder angeschraubt ist. Die Schlaufe 26 ist zur Schieberichtung des Einkaufswagens hin geöffnet. Der Schwenkbereich des Schwenkteiles 15 nach rückwärts, in der Zeichnung nach links, wird somit durch das Halteteil 25, und nach vorne durch die Träger 6 begrenzt.

In Fig. 2 erkennt man, daß die obere Querverbindung 27 des Schwenkteiles 15 im mittleren Abschnitt tiefer verläuft, als an beiden äußeren Bereichen. Es wird dadurch ein Einschnitt 28 gebildet, der in Fahrtrichtung betrachtet, gegenüber dem Halteteil 25 angeordnet ist und der breiter ist, als die Breite des Halteteiles 25. Ebenso sind die Längsstreben 29 des Schwenkteiles 15 im mittleren Bereich weiter entfernt, als die Breite des Halteteiles 25. Dadurch ist es möglich, das Schwenkteil 15 in Ruhelage ganz an die Träger 6 zu schwenken, ohne daß es beim Schwenkvorgang an das Halteteil 25 anstößt. Es ist auch in äquivalenter Weise möglich, anstelle eines mittig angeordneten Einschnittes 28, zwei an den Seiten, also nahe der Anschläge 21 angeordnete Einschnitte 28 vorzusehen und statt nur eines Halteteiles 25 zwei entsprechend plazierte Halteteile 25 zu verwenden. Die Verbindung zwischen Schwenkteil 15 und dem oder den Halteteilen 25 ist in Gebrauchslage der Ablage 14 im wesentlichen schiebeführungsartiger Natur.

Schließlich ist es denkbar, in einer zu Fig. 1 und 2 äquivalenten Weise, an der vorderen Querverbindung 39 des Ablageabschnittes 20 einen nach oben und nach rückwärts gerichteten Haken vorzusehen, der an einem an der Unterseite des Korbes 9 oder am Fahrgestell 2 befindlichen, quer zur Fahrtrichtung verlaufenden Stab hängenbleibt und somit den Schwenkbereich des Schwenkteiles 15 nach hinten begrenzt. In diesem Falle ist das Halteteil 25 durch den Stab gebildet.

## Patentansprüche

1. Stapelbarer Einkaufswagen (1), im wesentlichen bestehend aus einem Fahrgestell (2) und einem auf Stützen des Fahrgestelles (2) aufgesetzten, eine Schiebeeinrichtung aufweisenden Korb (9), dessen Rückwand (11) in das Korbinnere verschwenkbar ist, wobei an dem der Schiebeeinrichtung zugeordneten Ende (3) des Einkaufswagens (1) eine aus einer Nichtgebrauchslage in eine Gebrauchslage und umgekehrt bewegbare Ablage (14) zum Abstellen größerer Gegenstände vorgesehen ist und die Ablage (14) aus einem Schwenkteil (15) besteht, das mit zwei auf Abstand gehaltenen Streben (18) ausgestattet ist, die mit ihren unteren Enden (19) um eine am rückwärtigen Ende (3) des Einkaufswagens (1) befindliche, waagrechte Achse (23) schwenkbar am Fahrgestell (2) befestigt sind und im oberen Bereich (16) des Schwenkteiles (15) ein zum Tragen der größeren Gegenstände bestimmter, winklig zu den Streben (18) angeordneter, zum vorderen Ende des Einkaufswagens (1) gerichteter und in Gebrauchslage bevorzugt rechtwinklig zur Rückwand (11) des Korbes (9) angeordneter, entgegen der Schieberichtung des Einkaufswagens (1) abfallend geneigter Ablageabschnitt (20) vorgesehen ist und wobei das um die waagrechte Achse (23) bewegbare Schwenkteil (15) durch wenigstens ein zwischen den Stützen angeordnetes Halteteil (25) in seiner Gebrauchslage so gehalten ist, daß das Halteteil (25) einen Teil des Schwenkteiles (15) hintergreift und der vom Halteteil (25) hintergriffene Teil des Schwenkteiles (15) durch den Ablageabschnitt (20) gebildet ist, dadurch gekennzeichnet, daß das wenigstens eine Halteteil (25) starr am Fahrgestell (2) oder Korb (9) befestigt und zur Schieberichtung des Einkaufswagens (1) hin offen ist.

2. Stapelbarer Einkaufswagen nach Anspruch 1, dadurch gekennzeichnet, daß das Halteteil (25) den Ablageabschnitt (20) an dessen vorderer Querstrebe (39) hintergreift.

3. Stapelbarer Einkaufswagen nach Anspruch 1 oder 2, dadurch gekennzeichnet, daß das Schwenkteil (15) eine Querverbindung (27) aufweist, in derwenigstens ein Einschnitt (28) vorgesehen ist, wobei jeder Einschnitt (28) in Schieberichtung betrachtet gegenüber dem jeweiligen Halteteil (25) angeordnet ist und daß jeder Einschnitt (28) breiter ist, als die Breite des jeweils gegenüberliegenden Halteteils (25).

## Claims

1. A stackable shopping trolley (1), essentially comprising a chassis (2) and a basket (9), which is mounted on supports of the chassis (2) and comprises a pushing device and a rear wall (11) pivotable into the basket interior, wherein a shelf (14) movable from an inoperative position into an operative position and vice versa for depositing larger articles is provided at the end (3) of the shopping trolley (1) associated with the pushing device and is formed by a pivotal member (15) provided with two spaced struts (18) secured at their lower ends (19) to the chassis (2) so as to pivot about a horizontal axis (23) arranged at the rear end (3) of the shopping trolley (1), and in the upper region (16) of the pivotal member (15) a depositing section (20) is provided for carrying the larger articles, said depositing section being arranged at an angle to the struts (18), extending towards the front end of the shopping trolley (1) and in the operative position preferably being arranged at right angles to the rear wall (11) of the basket (9) and sloping downwards in the opposite direction to the pushing direction of the shopping trolley (1), the pivotal member (15) movable about the horizontal axis (23) being held in its operative position by at least one securing member (25) arranged between the supports in such a manner that the securing member (25) engages behind part of the pivotal member (15) and the part of the pivotal member (15) behind which the securing member engages is formed by the depositing section (20), characterised in that at least one securing member (25) is rigidly secured to the chassis (2) or basket (9) and is open in the pushing direction of the shopping trolley (1).

2. Astackable shopping trolley according to Claim 1, characterised in that the securing member (25) engages behind the front crossmember (39) of the depositing section (20).

3. Astackable shopping trolley according to Claim 1 or 2, characterised in that the pivotal member (15) comprises a cross connection (27), in which at least one recess (28) is provided, each recess (28) being arranged opposite the respective securing member (25) when viewed in the pushing direction and in that each recess (28) is wider than the width of the respective opposite securing member (25).

## Revendications

1. Chariot à provisions emboîtable (1), constitué pour l'essentiel par un châssis de roulement (2) et par un panier (9) qui est posé sur des tiges d'appui du châssis de roulement (2), qui présente un moyen pour le pousser et dont la paroi arrière (11) peut pivoter pour entrer dans le panier, cependant qu'il est prévu, à l'extrémité (3) du chariot à provisions (1) qui est associée au moyen pour pousser le chariot, un support (14) qui peut être déplacé depuis une position de non-utilisation jusqu'à une position d'utilisation, et inversement, et qui est destiné à y déposer des objets encombrants, et que le support (14) est constitué par une partie pivotante (15), laquelle est équipée de deux montants (18) qui sont maintenus à distance l'un de l'autre et qui sont fixés au châssis de roulement (2) par leurs extrémités inférieures (19) en pouvant pivoter autour d'un axe horizontal (23) situé à l'extrémité arrière (3) du chariot à provisions (1), et, dans la région supérieure (16) de la partie pivotante (15), par une partie formant support (20) qui est destinée à supporter les objets encombrants, qui est disposée en formant un angle par rapport aux montants (18), qui est dirigée vers l'extrémité avant du chariot à provisions (1), qui est de préférence disposée à angle droit par rapport à la paroi arrière (11) du panier (9) en position d'utilisation et qui est inclinée vers le bas à l'opposé de la direction où l'on pousse le chariot à provisions (1), et cependant que la partie pivotante (15) qui peut être déplacée autour de l'axe horizontal (23) est maintenue dans sa position d'utilisation par au moins une pièce de maintien (25) disposée entre les montants, et ce, d'une manière telle que la pièce de maintien (25) vienne en prise par l'arrière avec une portion de la partie pivotante (15) et que la portion de la partie pivotante (15) qui est saisie par l'arrière par la pièce de maintien (25) soit constituée par la partie formant support (20), caractérisé par le fait qu'au moins une pièce de maintien (25) est fixée rigidement au châssis de roulement (2) ou au panier (9), et qu'elle est ouverte vers la direction où l'on pousse le chariot à provisions (1).

2. Chariot à provisions emboîtable selon la revendication 1, caractérisé par le fait que la pièce de maintien (25) vient en prise par l'arrière avec la partie formant support (20) sur la traverse avant (39) de celle-ci.

3. Chariot à provisions emboîtable selon la revendication 1 ou 2, caractérisé par le fait que la partie pivotante (15) comporte une traverse de liaison (27) dans laquelle il est prévu au moins un surbaissement (28), chaque surbaissement (28) étant disposé en face de la pièce de maintien correspondante (25) lorsqu'il est vu dans la direction où l'on pousse le chariot, et par le fait que chaque surbaissement (28) est plus large que la pièce de maintien (25) qui lui fait face à chaque fois.
